# EUROPÄISCHE PATENTSCHRIFT

(11) **EP 4 058 336 B1**
(45) Veröffentlichungstag und Bekanntmachung des Hinweises auf die Patenterteilung: **15.05.2024**
(21) Anmeldenummer: 20835713.7
(22) Anmeldetag: 15.12.2020
(51) Int. Cl.: B61F 1/08

(54) **BEFESTIGUNGSVORRICHTUNG ZUR ELASTISCHEN AUFHÄNGUNG EINER FAHRZEUGKOMPONENTE**
FASTENING DEVICE FOR ELASTICALLY SUSPENDING A VEHICLE COMPONENT
DISPOSITIF DE FIXATION POUR LA SUSPENSION ÉLASTIQUE D'UN ÉLÉMENT DE VÉHICULE

(30) Priorität: 16.01.2020 DE 102020200473
(43) Veröffentlichungstag der Anmeldung: 21.09.2022
(73) Patentinhaber: Siemens Mobility GmbH, 81739 München (DE)
(72) Erfinder: DORNBERGER, Peter, 90489 Nürnberg (DE); BLISSE, Johannes, 91080 Spardorf (DE); APELT, Frank, 91154 Bernlohe (DE); BAUMANN, Thomas, 97084 Würzburg (DE)
(74) Vertreter: Siemens Patent Attorneys
(86) Internationale Anmeldenummer: PCT/EP2020/086139
(87) Internationale Veröffentlichungsnummer: WO 2021/144102

(56) Entgegenhaltungen:
- EP-A1- 0 975 502
- US-A- 2 650 548
- US-A- 3 955 808
- US-A1- 2011 057 407

## Beschreibung

Die Erfindung bezieht sich auf eine Befestigungsvorrichtung zur elastischen Aufhängung einer Komponente eines Fahrzeugs an einem Rohbau des Fahrzeugs nach dem Oberbegriff von Anspruch 1.

Danach weist eine solche Befestigungsvorrichtung ein äußeres Gehäuse auf, das an dem Rohbau des Fahrzeugs befestigbar ist, und ein in dem Gehäuse angeordnetes Aufnahmebauteil, das gegenüber dem Gehäuse mittels elastischer Elemente gelagert ist und eine Aufnahme für ein Befestigungselement der Komponente des Fahrzeugs aufweist. Solche Befestigungsvorrichtungen werden insbesondere zur Aufhängung von Großkomponenten (Unterflur/Dach: Haupttransformator mit Kühlanlage, Netzfilterdrossel, Energieversorgungsblock EVB, Containereinheit E-Geräte, Bremscontainer, Batterien, Stromrichter, Netzdrossel; Dach: Bremswiderstand) am Rohbau eines Schienenfahrzeugs eingesetzt. Dabei sind zwei wesentliche Anforderungen zu erfüllen:
Erstens kommt es häufig vor, dass die Großkomponente und der Rohbau des Schienenfahrzeugs aus unterschiedlichen Werkstoffen bestehen, deren Wärmeausdehnungskoeffizienten ebenfalls verschieden sind. Die Befestigungsvorrichtung muss somit geeignet sein, unterschiedliche thermische Dehnungen der Komponente und des Rohbaus des Schienenfahrzeugs auszugleichen, wie sie beispielsweise auftreten, wenn sich die Temperatur an der Befestigungsvorrichtung im Betrieb des Schienenfahrzeugs, ausgehend von einer Montagetemperatur von 20°C, auf eine Betriebstemperatur von beispielsweise 60°C erhöht und der Rohbau des Schienenfahrzeugs aus Aluminium, die Komponente jedoch aus Stahl hergestellt ist.

Die zweite Anforderung an die Befestigungsvorrichtung bezieht sich darauf, dass eine Entkopplung von Schwingungen der mittels der Befestigungsvorrichtung gelagerten Komponente, insbesondere Großkomponente, zum Rohbau des Schienenfahrzeugs erreicht werden soll. Dies erfordert eine elastische Lagerung der Komponente gegenüber dem Rohbau. Eine Übertragung der Schwingungen der Komponente auf den Rohbau hätte die Nachteile, dass es zu einer höheren Geräuschemission und zu verringertem Fahrkomfort kommt. Zudem würden auch die Anbindungspunkte zwischen Komponente und Rohbau ohne Schwingungsentkopplung stärker dynamisch beansprucht werden und müssten entsprechend größer dimensioniert werden.

Bisher werden diese Anforderungen an die Befestigungsvorrichtdung vorrangig durch den Einsatz von Gummimetall-Elementen erfüllt. Beispielsweise kann ein Keillager verwendet werden, bei dem eine schwingungsmäßige Entkopplung der Komponente vom Rohbau des Fahrzeugs über vulkanisierte Gummielemente erfolgt. Der Einsatz dieser Gummielemente hat jedoch den erheblichen Nachteil, dass das Gummi einer starken Alterung unterworfen ist. Dies hat zur Folge, dass die Gummielemente regelmäßig ausgetauscht werden müssen, wodurch hohe Wartungskosten am Fahrzeug entstehen, weil der Wartungsaufwand durch das erforderliche Lösen insbesondere der Großkomponenten sehr erheblich ist. Aus dem Stand der Technik sind Befestigungsvorrichtungen mit elastischen Elementen aus der US 2011/057407 A1 und der US 3 955 808 A bekannt.

Ausgehend hiervon liegt der Erfindung die Aufgabe zugrunde, eine Befestigungsvorrichtung der eingangs genannten Art derart weiterzuentwickeln, dass sie im Hinblick auf ihre Wartungsanforderungen verbessert ist.

Diese Aufgabe wird durch eine Befestigungsvorrichtung mit den Merkmalen des Anspruchs 1 gelöst.

Danach zeichnet sich die eingangs beschriebene Befestigungsvorrichtung zur elastischen Aufhängung einer Komponente eines Fahrzeugs an einem Rohbau des Fahrzeugs dadurch aus, dass das Gehäuse einen zentralen, ringförmigen Abschnitt mit einer Aufnahmeöffnung zur Aufnahme des Aufnahmebauteils und von dem zentralen Abschnitt aus nach außen vorstehende Befestigungsabschnitte zur Befestigung des Gehäuses an dem Rohbau des Fahrzeugs aufweist, wobei das Aufnahmebauteil unter Zwischenlage der elastischen Elemente in die Aufnahmeöffnung des Gehäuses eingesetzt ist und die elastischen Elemente von Ganzmetallkissen gebildet sind. Als elastische Elemente, die für eine Schwingungsentkopplung zwischen der Komponente und dem Rohbau des Fahrzeugs sorgen, werden erfindungsgemäß (nahezu) wartungsfreie Ganzmetallkissen eingesetzt. In dieser Weise werden die Wartungsanforderungen für die Befestigungsvorrichtung gegenüber der bisherigen Lösung deutlich vermindert.

Erfindungsgemäß sind die elastischen Elemente von Ganzmetallkissen gebildet. Diese zeichnen sich dadurch aus, dass sie im Vergleich zu Gummielementen wesentlich geringere Alterungseffekte zeigen. Insbesondere können die Ganzmetallkissen aus einem zusammengepressten Geflecht aus Edelstahldraht bestehen. Bevorzugt ist das Gehäuse einstückig ausgebildet, so dass der zentrale, ringförmige Abschnitt und die Befestigungsabschnitte zum Rohbau als Montageeinheit vorliegen.

Das Aufnahmebauteil und der zentrale, ringförmige Abschnitt des Gehäuses können jeweils im Querschnitt allgemein rechtwinkelig ausgebildet sein, und die Befestigungsabschnitte des Gehäuses können sich jeweils in Verlängerung einer Seite des zentralen, ringförmigen Abschnitts erstrecken. Bei dieser Ausführungsform ergibt sich eine vierkantige Ringform für die Aufnahmeöffnung des Gehäuses, in welcher das Aufnahmebauteil zum Sichern der Komponente des Fahrzeugs zu lagern ist. Die rechtwinkelige Querschnittsform hat zudem den Vorteil, dass das Aufnahmebauteil gegenüber Drehungen um eine Mittelachse der Aufnahmeöffnung festgelegt bleibt.

Das Aufnahmebauteil kann vorteilhafterweise an seinem dem Gehäuse zugewandten Umfangsabschnitten Vertiefungen zur Aufnahme der elastischen Elemente aufweisen. Bei dieser Ausführungsform ist es möglich, die elastischen Elemente mit Hilfe der Vertiefungen an der Außenseite des Aufnahmebauteils zu halten. Bevorzugt sind somit das Aufnahmebauteil und die elastischen Elemente vormontiert, so dass diese vormontierte Einheit in die Aufnahmeöffnung des Gehäuses eingepresst werden kann. Daraus ergibt sich eine Vorspannung der eingesetzten elastischen Elemente, so dass das Aufnahmebauteil nach vollständigem Einpressen in die Aufnahmeöffnung am Platz gehalten wird.

Der zentrale Abschnitt des Gehäuses kann an einer der Seiten der Aufnahmeöffnung Anschlagsflächen zur Begrenzung der Bewegung des Aufnahmebauteils entlang der Aufnahmeöffnung aufweisen. Dies ermöglicht es, das Aufnahmebauteil gegen ein Herausfallen aus der Aufnahmeöffnung an der der Komponente gegenüberliegenden Seite der Aufnahmeöffnung zu sichern.

Die Aufnahme des Aufnahmebauteils ist bevorzugt als Bohrung ausgeführt. In diese Bohrung kann dann ein geeignetes Befestigungselement der Komponente des Fahrzeugs, beispielsweise ein entsprechend den auftretenden Kräften dimensionierter Bolzen, in die Bohrung des Aufnahmebauteils eingesetzt werden.

Zur Herstellung der Befestigungsvorrichtung ist es möglich, dass das Gehäuse und das Aufnahmebauteil aus Platten-/Stangenhalbzeugen hergestellt sind.

Alternativ dazu können das Gehäuse und eine Zapfenaufnahme des Aufnahmebauteils durch Gießen hergestellt sein. Dieses Variante ist insbesondere relevant für die Herstellung von mittleren und großen Stückzahlen der Befestigungsvorrichtung.

Die Funktion und die Montage der Befestigungsvorrichtung sind identisch mit der oben bereits erläuterten. Eine Nachbearbeitung der Befestigungsvorrichtung ist lediglich an der Zapfenaufnahme des Aufnahmebauteils und an den Anlageflächen des Gehäuses zum Rohbau des Fahrzeugs erforderlich.

Es ist hervorzuheben, dass die vorstehend erläuterte Befestigungsvorrichtung sowohl mittel als auch unmittelbar am Rohbau eines Fahrzeugs, insbesondere Schienenfahrzeugs, montiert sein kann. So ist es denkbar, dass die Befestigungsvorrichtung innerhalb einer Konsole montiert ist, welche wiederum Befestigungsabschnitte zur Anbindung an den Rohbau des Fahrzeugs aufweist. Typischer Weise werden zur Anbindung der Befestigungsvorrichtung an den Rohbau des Fahrzeugs Schraubverbindungen zum Einsatz kommen.

Gemäß einer bevorzugten Ausführungsform ist vorgesehen, dass die elastischen Elemente von Ganzmetallkissen aus Edelstahl gebildet sind, das Gehäuse aus Aluminium oder beschichtetem Aluminium hergestellt ist und zwischen die elastischen Elemente und das Gehäuse ein elektrochemisch neutral beschichtetes Edelstahlblech gelegt ist. Dabei ist hervorzuheben, dass die Herstellung des Gehäuses aus Aluminium oder beschichtetem Aluminium gegenüber einem Gehäuse aus Edelstahl erhebliche Gewichts- und Kostenvorteile mit sich bringt. Das Edelstahlblech kann insbesondere mit einer organischen Beschichtung oder einer Verzinnung versehen sein, wodurch es elektrochemisch neutral wird.

Ausführungsbeispiele der Erfindung werden nachfolgend unter Bezugnahme auf die Zeichnung noch näher erläutert. Es zeigen:
- Figur 1: eine perspektivische Ansicht einer Befestigungsvorrichtung zur elastischen Aufhängung einer Komponente eines Fahrzeugs an einem Rohbau des Fahrzeugs in einer ersten Ausführungsform,
- Figur 2: eine auseinandergezogene Ansicht der Befestigungsvorrichtung von Figur 1,
- Figur 3: eine Seitenansicht eines Gehäuses der Befestigungsvorrichtung von Figur 1,
- Figur 4: eine Schnittansicht eines Aufnahmebauteils der Befestigungsvorrichtung von Figur 1,
- Figur 5: eine perspektivische Ansicht einer Befestigungsvorrichtung zur elastischen Aufhängung einer Komponente eines Fahrzeugs an einem Rohbau des Fahrzeugs in einer zweiten Ausführungsform,
- Figur 6: eine perspektivische Ansicht der Befestigungsvorrichtung von Figur 5, eingesetzt in eine Konsole,
- Figur 7: eine perspektivische Ansicht einer Befestigungsvorrichtung zur elastischen Aufhängung einer Komponente eines Fahrzeugs an einem Rohbau des Fahrzeugs in einer dritten Ausführungsform,
- Figur 8: eine weitere perspektivische Ansicht der Befestigungsvorrichtung von Figur 7,
- Figur 9: eine perspektivische Ansicht einer Befestigungsvorrichtung zur elastischen Aufhängung einer Komponente eines Fahrzeugs an einem Rohbau des Fahrzeugs in einer vierten Ausführungsform und
- Figur 10: eine auseinandergezogene Ansicht der Befestigungsvorrichtung von Figur 9.

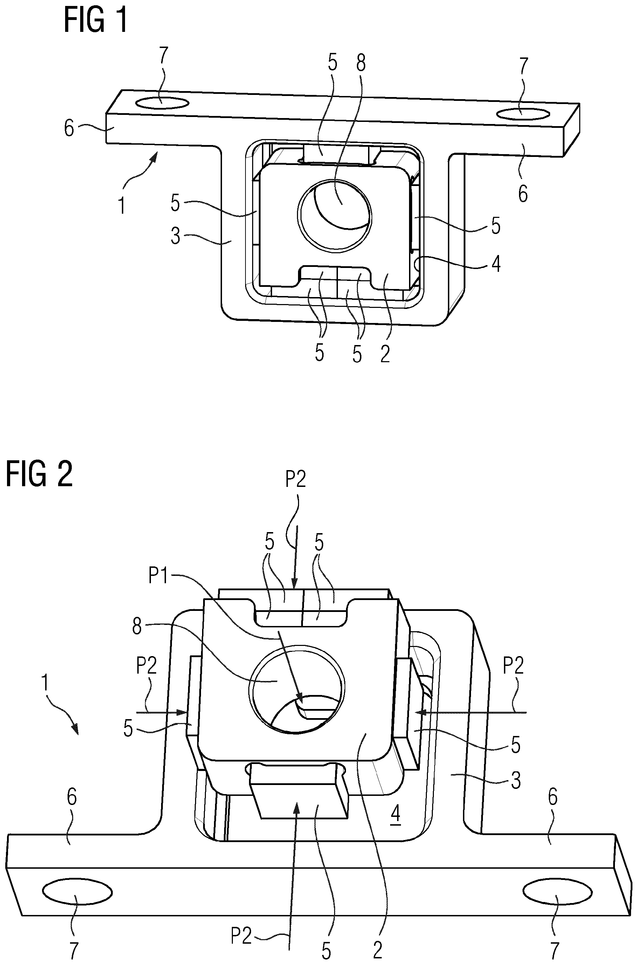

Wie aus Figur 1 hervorgeht, umfasst eine Befestigungsvorrichtung zur elastischen Aufhängung einer Komponente eines Fahrzeugs, insbesondere einer Großkomponente, an einem Rohbau des Fahrzeugs ein Gehäuse 1 sowie ein in dem Gehäuse 1 elastisch gelagertes Aufnahmebauteil 2. Das Gehäuse 1 weist einen zentralen, ringförmigen Abschnitt 3 auf, der auf seiner Innenseite eine Aufnahmeöffnung 4 zur Aufnahme des Aufnahmebauteils 2 zeigt. Der zentrale, ringförmige Abschnitt 3 hat einen im wesentlichen rechtwinkeligen Querschnitt. Gleiches gilt für das in die Aufnahmeöffnung 4 eingesetzte Aufnahmebauteil 2. Das Aufnahmebauteil 2 ist mittels einer Mehrzahl von Metallkissen 5, die an seinen dem ringförmigen Abschnitt 3 des Gehäuses zugewandten Umfangsabschnitten angeordnet sind, gegenüber dem Gehäuse elastisch gelagert.

Zur Montage des Gehäuses an dem Rohbau des Fahrzeugs weist das Gehäuse von dem zentralen, ringförmigen Abschnitt 3 aus nach außen vorstehende Befestigungsabschnitte 6 auf, die jeweils mit Durchgangsbohrungen 7 zur Durchführung von Schrauben ausgestattet sind.

Die Befestigungsabschnitte 6 und eine Seite des zentralen, ringförmigen Abschnitts 3 liegen in einer Ebene.

Das Aufnahmebauteil 2 ist mit einer zentralen Aufnahmebohrung 8 ausgestattet, in die ein Befestigungselement der an dem Fahrzeugrohbau zu montierenden Komponente eingehängt werden kann.

Die Metallkissen 5 sind über den Umfang des Aufnahmebauteils 2 nicht gleich verteilt. Insofern sind im dargestellten Ausführungsbeispiel auf der den Befestigungsabschnitten 6 gegenüberliegenden Seite des Aufnahmebauteils 2 insgesamt 4 Metallkissen 5 vorgesehen, die als zwei nebeneinander angeordnete Stapel von jeweils zwei Metallkissen 5 vorliegen. Sämtliche weiteren Seiten des im Wesentlichen rechtwinkeligen Aufnahmebauteils 2 sind jeweils mit nur einem Metallkissen 5 ausgestattet, das zwischen einer Innenseite des zentralen, ringförmigen Abschnitts 3 und dem Aufnahmebauteil 2 liegt.

Es ist hervorzuheben, dass die Art der Anordnung und die Anzahl der Metallkissen 5 in der Befestigungsvorrichtung in anderen Anwendungsfällen von der hier vorgestellten Konfiguration abweichen kann. Insbesondere hängt die Art der Anordnung und die Anzahl der eingesetzten Metallkissen 5 von den jeweils an die Befestigungsvorrichtung gestellten Anforderungen im Hinblick auf die Federungs- und Dämpfungseigenschaften in der jeweiligen Raumrichtung ab. Dabei kann grundsätzlich gesagt werden, dass durch eine Parallelschaltung der Metallkissen 5 die Steifigkeit erhöht wird, während mit einer Reihenschaltung der Metallkissen 5 erreicht wird, dass der mögliche Federweg und die Elastizität vergrößert werden.

Damit bei Belastung der Befestigungsvorrichtung, die auch als Lager bezeichnet werden kann, sämtliche als Dämpfungselemente wirkende Metallkissen 5 Kontakt zur Innenseite des zentralen, ringförmigen Abschnitts 3 des Gehäuses 1 haben, sind die Metallkissen 5 vorgespannt. Wie aus Figur 2 hervorgeht, wird zunächst eine vormontierte Einheit aus dem Aufnahmebauteil 2 und den an dessen Umfangsseite vorgesehenen Metallkissen 5 gebildet. Die Metallkissen 5 werden vorzugsweise mit dem Aufnahmebauteil 2 vorgespannt und anschließend in das Gehäuse 1 eingepresst. Die Vorspannung auf die Metallkissen 5 ist für das Montieren dieser mit dem Aufnahmebauteil 2 und dem Gehäuse 1 erforderlich und muss mit einer geeigneten Vorrichtung erfolgen. Diese vormontierte Einheit wird oberhalb der Aufnahmeöffnung 4 platziert. Sodann wird mittels einer nicht dargestellten Einpressvorrichtung in Richtung des Pfeiles P1 in Figur 2 die vormontierte Einheit aus Aufnahmebauteil 2 und Metallkissen 5 in die Aufnahmeöffnung 4 des Gehäuses 1 eingepresst. In dieser Weise sind sämtliche Metallkissen 5 einer Vorspannkraft unterworfen, deren Wirkungsrichtung in Figur 2 jeweils mittels Pfeilen P2 angegeben ist. Im Ergebnis ist somit das Aufnahmebauteil 2 mittels der vorgespannten Metallkissen 5 in der Aufnahmeöffnung 4 des Gehäuses 1 gesichert. Die Metallkissen 5 werden mit dem Aufnahmebauteil 2 und dem Gehäuse 1 in geeigneter Weise vormontiert, wodurch die Metallkissen unter Vorspannung stehen.

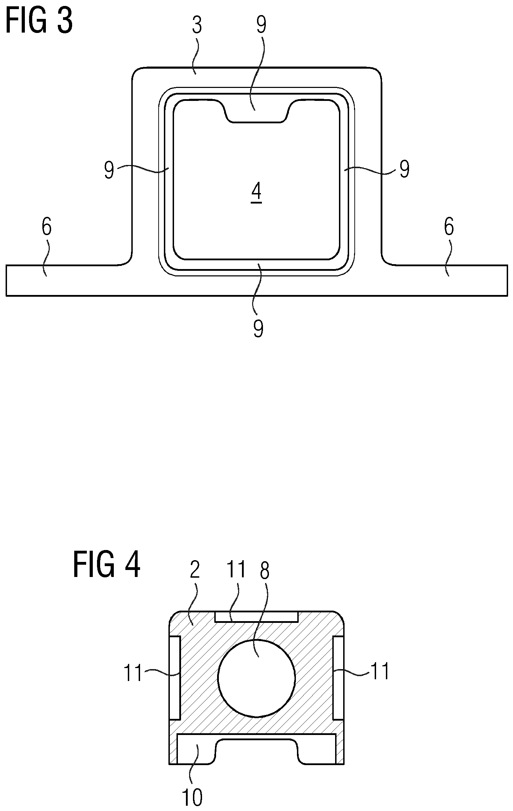

Aus Figur 3 geht die Ausgestaltung des Gehäuses 1 mehr im Detail hervor. Im Einzelnen sind hier deutlich Anschlagsflächen 9 erkennbar, an denen zugeordnete Seitenflächen der Metallkissen 5 anliegen, sobald die vormontierte Einheit aus Aufnahmebauteil 2 und Metallkissen 5 in die Aufnahmeöffnung 4 eingepresst ist. Dies verhindert bei Belastung der Befestigungsvorrichtung eine Bewegung des Aufnahmebauteils 2 in Einpressrichtung nach Figur 2.

Figur 4 zeigt nunmehr, wie die Umfangsfläche des Aufnahmebauteils 2, die der Innenseite des zentralen, ringförmigen Abschnitts 3 des Gehäuses 1 zugewandt ist, beschaffen ist. An einer Seite des im Wesentlichen rechtwinkelig geformten Aufnahmebauteils 2 findet sich eine Vertiefung 10, die zur Aufnahme der vorher erwähnten vier Metallkissen 5 dient. Die weiteren drei Seiten des Aufnahmebauteils 2 sind dem gegenüber mit vergleichsweise kleiner dimensionierten Vertiefungen 11 ausgestattet, die jeweils zur Aufnahme eines einzigen der Metallkissen 5 dienen.

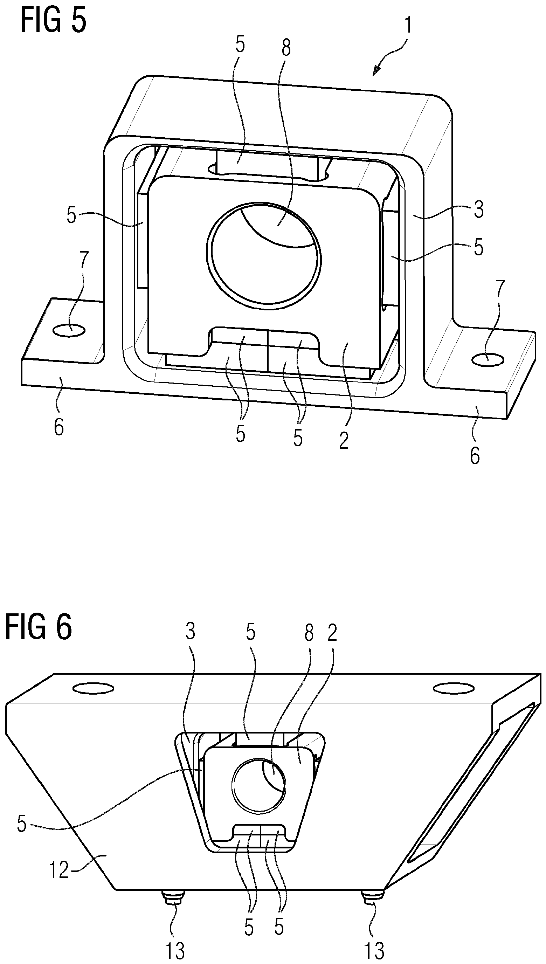

Eine zweite Ausführungsform der Erfindung ist anhand der Figuren 5 und 6 erläutert. Im Vergleich zur ersten Ausführungsform ist die Befestigungsvorrichtung lediglich kleiner ausgeführt. Im Gegensatz zur ersten Ausführungsform dienen jedoch nunmehr die Durchgangsbohrungen 7 zur Befestigung der Befestigungsvorrichtung an einer Konsole 12. Dies geschieht mit Hilfe geeigneter Schraubverbindungen 13, welche eine einem Fahrzeugrohbau gegenüberliegende Seite der Konsole 12 mit den Befestigungsabschnitten 6 der Befestigungsvorrichtung verbinden. Insofern ist bei dieser Ausführungsform die Befestigungsvorrichtung nicht unmittelbar, wie bei der ersten Ausführungsform, sondern mittelbar über die Konsole 12 mit dem Fahrzeugrohbau verbunden.

Es ist hervorzuheben, dass bei der Befestigungsvorrichtung nach der ersten und zweiten Ausführungsform jeweils das Gehäuse 1 und das Aufnahmebauteil 2 aus Platten-/Stangenhalbzeugen hergestellt sind. Dabei liegen sowohl das Gehäuse 1 als auch das Aufnahmebauteil jeweils einstückig vor.

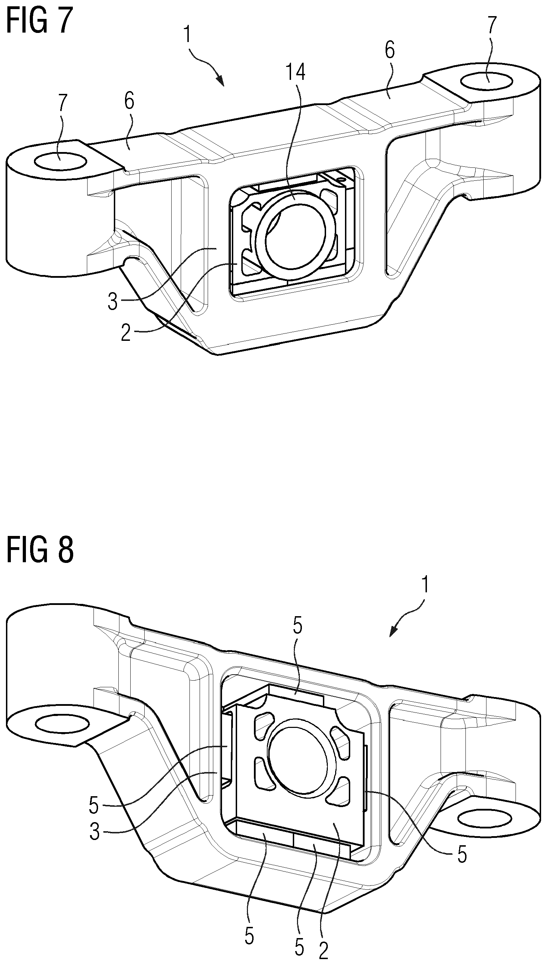

Aus den Figuren 7 und 8 ergibt sich eine dritte Ausführungsform der Befestigungsvorrichtung, welche wiederum zur unmittelbaren Montage am Rohbau eines Fahrzeugs vorgesehen ist. Wie bei den vorstehend erläuterten Ausführungsformen ist auch hier das Gehäuse 3 einteilig hergestellt. Anders als bei der ersten und der zweiten Ausführungsform zeigt bei der dritten Ausführungsform jedoch das Aufnahmebauteil 2 eine gesonderte Zapfenaufnahme 14, die den zentralen Befestigungsteil des Aufnahmebauteils 2 bildet. Die Lagerung des Aufnahmebauteils 2 in dem Gehäuse 3 erfolgt in derselben Weise mit Hilfe von Metallkissen 5 wie bei den beiden vorstehend erläuterten Ausführungsformen.

Bei der dritten Ausführungsform ist sowohl das Gehäuse 3 als auch die Zapfenaufnahme 14 durch Feingießen gefertigt, was insbesondere für die Herstellung von mittleren und großen Stückzahlen der Befestigungsvorrichtung günstig ist.

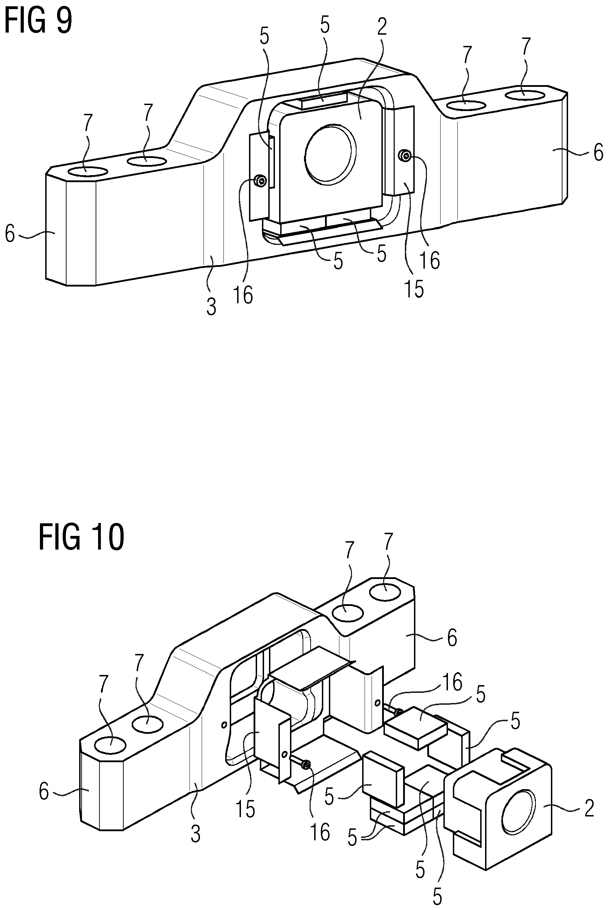

Die Figuren 9 und 10 veranschaulichen eine vierte Ausführungsform der Befestigungsvorrichtung. Diese Ausführungsform zeichnet sich dadurch aus, dass zwischen die beispielsweise aus Edelstahl bestehenden Metallkissen 5 und das Gehäuse 3 ein Edelstahlblech 15 gelegt ist, welches eine Beschichtung aufweist, welche gewährleistet, dass das Edelstahlblech 15 elektrochemisch neutral ist. Bei der Beschichtung kann es sich beispielsweise um eine geeignete organische Beschichtung oder auch um eine Verzinnung handeln. Die Zwischenlage des Edelstahlblechs 15, welches mit zwei Schrauben 16 am Gehäuse 3 befestigt ist, gestattet es, das Gehäuse 3 aus Aluminium, insbesondere beschichtetem Aluminium herzustellen, ohne dass Korrosionsgefahr besteht.

## Patentansprüche

1. Befestigungsvorrichtung zur elastischen Aufhängung einer Komponente eines Fahrzeugs an einem Rohbau des Fahrzeugs, mit einem äußeren Gehäuse (1), das an dem Rohbau des Fahrzeugs befestigbar ist, und einem in dem Gehäuse (1) angeordneten Aufnahmebauteil (2), das gegenüber dem Gehäuse (1) mittels elastischer Elemente (5) gelagert ist und eine Aufnahme (8) für ein Befestigungselement der Komponente des Fahrzeugs aufweist, wobei das Gehäuse (1) einen zentralen, ringförmigen Abschnitt (3) mit einer Aufnahmeöffnung (4) zur Aufnahme des Aufnahmebauteils (2) und von dem zentralen Abschnitt (3) aus nach außen vorstehende Befestigungsabschnitte (6) zur Befestigung des Gehäuses (1) an dem Rohbau des Fahrzeugs aufweist, wobei das Aufnahmebauteil (2) unter Zwischenlage der elastischen Elemente (5) in die Aufnahmeöffnung (4) des Gehäuses (1) eingesetzt ist **dadurch gekennzeichnet, dass** die elastischen Elemente (5) von Ganzmetallkissen gebildet sind.

2. Befestigungsvorrichtung nach Anspruch 1,
**dadurch gekennzeichnet, dass**
das Gehäuse (1) einstückig ausgebildet ist.

3. Befestigungsvorrichtung nach einem der Ansprüche 1 oder 2,
**dadurch gekennzeichnet, dass**
das Aufnahmebauteil (2) und der zentrale, ringförmige Abschnitt (3) des Gehäuses (1) jeweils im Querschnitt allgemein rechtwinkelig ausgebildet sind und sich die Befestigungsabschnitte (6) des Gehäuses (1) in Verlängerung einer Seite des zentralen, ringförmigen Abschnittes (3) erstrecken.

4. Befestigungsvorrichtung nach einem der Ansprüche 1 bis 3,
**dadurch gekennzeichnet, dass** das Aufnahmebauteil (2) an seinen dem Gehäuse (1) zugewandten Umfangsabschnitten Vertiefungen (10, 11) zur Aufnahme der elastischen Elemente (5) aufweist.

5. Befestigungsvorrichtung nach einem der Ansprüche 1 bis 4,
**dadurch gekennzeichnet, dass**
das Aufnahmebauteil (2) und die elastischen Elemente (5) vormontiert sind und diese vormontierte Einheit in die Aufnahmeöffnung (4) des Gehäuses (1) eingepresst ist.

6. Befestigungsvorrichtung nach einem der Ansprüche 1 bis 5,
**dadurch gekennzeichnet, dass**
der zentrale Abschnitt (3) des Gehäuses (1) an einer der Seiten der Aufnahmeöffnung (4) Anschlagsflächen (9) zur Begrenzung der Bewegung des Aufnahmebauteils (2) entlang der Aufnahmeöffnung aufweist.

7. Befestigungsvorrichtung nach einem der Ansprüche 1 bis 6,
**dadurch gekennzeichnet, dass**
die Aufnahme (8) des Aufnahmebauteils (2) als Bohrung ausgeführt ist.

8. Befestigungsvorrichtung nach einem der Ansprüche 1 bis 7,
**dadurch gekennzeichnet, dass**
das Gehäuse (1) und das Aufnahmebauteil (2) aus Platten-/Stangen-Halbzeugen hergestellt sind.

9. Befestigungsvorrichtung nach einem der Ansprüche 1 bis 7,
**dadurch gekennzeichnet, dass**
das Gehäuse (1) und eine Zapfenaufnahme (14) des Aufnahmebauteils (2) durch Feingießen hergestellt sind.

10. Befestigungsvorrichtung nach einem der Ansprüche 1 bis 8,
**dadurch gekennzeichnet, dass**
die elastischen Elemente (5) von Ganzmetallkissen aus Edelstahl gebildet sind, das Gehäuse (3) aus Aluminium oder beschichtetem Aluminium hergestellt ist und zwischen die elastischen Elemente (5) und das Gehäuse (3) ein elektrochemisch neutral beschichtetes Edelstahlblech (15) gelegt ist.

## Claims

1. Fastening device for elastically suspending a component of a vehicle on a bodyshell of the vehicle, having an outer housing (1), which can be fastened on the bodyshell of the vehicle, and having a receiving part (2), which is arranged in the housing (1), is mounted in relation to the housing (1) by means of elastic elements (5) and has a mount (8) for a fastening element of the component of the vehicle, wherein the housing (1) has a central, ring-form portion (3) with a receiving opening (4) for receiving the receiving part (2) and also has fastening portions (6), which project outwards from the central portion (3) and are intended for fastening the housing (1) on the bodyshell of the vehicle, wherein the receiving part (2) is inserted into the receiving opening (4) of the housing (1) with the interposition of the elastic elements (5), **characterized in that** the elastic elements (5) are formed by all-metal cushions.

2. Fastening device according to Claim 1,
**characterized in that**
the housing (1) is formed in one piece.

3. Fastening device according to either of Claims 1 and 2,
**characterized in that**
the receiving part (2) and the central, ring-form portion (3) of the housing (1) are each formed so as to be generally right-angled in cross section, and the fastening portions (6) of the housing (1) run in extension of one side of the central, ring-form portion (3).

4. Fastening device according to one of Claims 1 to 3,
**characterized in that**, on its perimeter portions which are directed towards the housing (1), the receiving part (2) has depressions (10, 11) for receiving the elastic elements (5).

5. Fastening device according to one of Claims 1 to 4,
**characterized in that**
the receiving part (2) and the elastic elements (5) are pre-assembled, and this pre-assembled unit is pressed into the receiving opening (4) of the housing (1).

6. Fastening device according to one of Claims 1 to 5,
**characterized in that**
on one of the sides of the receiving opening (4), the central portion (3) of the housing (1) has stop surfaces (9) for delimiting the movement of the receiving part (2) along the receiving opening.

7. Fastening device according to one of Claims 1 to 6,
**characterized in that**
the mount (8) of the receiving part (2) is configured in the form of a bore.

8. Fastening device according to one of Claims 1 to 7,
**characterized in that**
the housing (1) and the receiving part (2) are produced from semi-finished plate/rod products.

9. Fastening device according to one of Claims 1 to 7,
**characterized in that**
the housing (1) and a pin or spindle mount (14) of the receiving part (2) are produced by investment casting.

10. Fastening device according to one of Claims 1 to 8,
**characterized in that**
the elastic elements (5) are formed by all-metal cushions made of stainless steel, the housing (3) is produced from aluminium or coated aluminium, and an electrochemically neutrally coated stainless-steel sheet (15) is placed between the elastic elements (5) and the housing (3).

## Revendications

1. Dispositif de fixation pour la suspension élastique d'un composant d'un véhicule à un chaudron du véhicule, comprenant un corps (1) extérieur, qui peut être fixé au chaudron du véhicule et une pièce (2) de réception, qui est disposée dans le corps (1), qui est montée par rapport au corps (1) au moyen d'éléments (5) élastiques et qui a un logement (8) pour un élément de fixation du composant du véhicule, dans lequel le corps (1) a une partie (3) annulaire centrale ayant une ouverture (4) de réception pour la réception de la pièce (2) de réception et des parties (6) de fixation, en saillie vers l'extérieur à partir de la partie (3) centrale, pour la fixation du corps (1) au chaudron du véhicule, dans lequel la pièce (2) de réception est, avec interposition des éléments (5) élastiques, insérée dans l'ouverture (4) de réception du corps (1), **caractérisé en ce que** les éléments (5) élastiques sont formés de coussins entièrement métalliques.

2. Dispositif de fixation suivant la revendication 1,
**caractérisé en ce que**
le corps (1) est d'une seule pièce.

3. Dispositif de fixation suivant l'une des revendications 1 ou 2,
**caractérisé en ce que**
la pièce (2) de réception et la partie (3) centrale annulaire du corps (1) sont constitués d'une manière générale à angle droit en section transversale et les parties (6) de fixation du corps (1) s'étendent dans un prolongement d'un côté de la partie (3) centrale annulaire.

4. Dispositif de fixation suivant l'une des revendications 1 à 3,
**caractérisé en ce que**
la pièce (2) de réception a, sur ses parties de pourtour tournées vers le corps (1), des cavités (10, 11) de réception des éléments (5) élastiques.

5. Dispositif de fixation suivant l'une des revendications 1 à 4,
**caractérisé en ce que**
la pièce (2) de réception et les éléments (5) élastiques sont prémontés et cette unité prémontée est enfoncée dans l'ouverture (4) de réception du corps (1).

6. Dispositif de fixation suivant l'une des revendications 1 à 5,
**caractérisé en ce que**
la partie (3) centrale du corps (1) a, sur l'un des côtés de l'ouverture (4) de réception, des surfaces (9) de butée, pour limiter le déplacement de la pièce (2) de réception dans l'ouverture de réception.

7. Dispositif de fixation suivant l'une des revendications 1 à 6,
**caractérisé en ce que**
le logement (8) de la pièce (2) de réception est réalisé sous la forme d'un alésage.

8. Dispositif de fixation suivant l'une des revendications 1 à 7,
**caractérisé en ce que**
le corps (1) et la pièce (2) de réception sont fabriqués en demi-produits plaque / barre.

9. Dispositif de fixation suivant l'une des revendications 1 à 7,
**caractérisé en ce que**
le corps (1) et un logement (14) de tourillons de la pièce (2) de réception sont fabriqués par coulée de précision.

10. Dispositif de fixation suivant l'une des revendications 1 à 8,
**caractérisé en ce que**
les éléments (5) élastiques sont formés de coussins entièrement métalliques en acier fin, le corps (3) est en aluminium revêtu et entre les éléments (5) élastiques et le corps (3) est mise une tôle (15) en acier fin revêtue de manière neutre par voie électrochimique.
